# EUROPEAN PATENT APPLICATION

(11) **EP 2 224 197 A2**
(43) Date of publication of application: **01.09.2010**
(21) Application number: 10154369.2
(22) Date of filing: 23.02.2010
(51) Int. Cl.: F28D 1/03, F28D 3/00, F28F 3/04

(54) **Heat exchanger for bathing shower**

(30) Priority: 25.02.2009 CN 200920051940 U; 04.03.2009 CN 200920052225 U
(71) Applicant: Cai, Ying Lin, Rong Chi Town, Shunde County Guangdong (CN); Hsu, Chao Fou, Sanmin Chiu Kaohsiung 807 (TW)
(72) Inventor: Cai, Ying Lin, Rong Chi Town (CN)
(74) Representative: Ihle, Kornelia

(57) **Abstract**

The present invention is to provide a manufacturing method and structure of heat exchanger for bathing shower so that the heat exchanger fabricated by the manufacturing method has simple structure to not only substantially decrease overall manufacturing cost with result in reducing selling price for being affordable by the purchasing ability of the consumers but also enhance overall energy saving effect and prolong service life span with result in encouraging the purchasing intention of the consumers. Thus, it is not only very beneficial to increase the promotional speed and popularity but also favorable to achieve the environmental protection in energy saving and carbon educing performance.

## Description

### Field of the Present Invention

The present invention relates to an energy saving heat exchanger for bathing shower having simple structure feature with multiple effects of significantly decreasing manufacturing labor hour and cost as well as enhancing energy saving efficiency so that consumers become more affordable in purchasing ability with result in favorable purchasing intention. Thus, it is not only very beneficial to increase the comprehensive promotional speed and popularity but also favorable to achieve the environmental protection in energy saving and carbon educing performance.

### Background of the Invention

For the purpose of reducing carbon product, many heat exchangers for bathing shower used in household have been introducing in the market such as disclosed in China patent publication No.CN2349494Y, CN2662185Y, CN2535702Y and so on. The design concept is that the incoming cold tap water running through in the heat exchanger is heated up by the bathed hot waste water, which is served as thermal source, so that the temperature of output tap water from heat exchanger becomes warmer than that of incoming tap water for being directed into an inlet pipe for the water heater of bathing shower. Thereby, the temperature of the inlet water for the water heater of bathing shower is increased to result in saving energy source for heating water. However, due to complicated structural design for these marketed heat exchangers, the manufacturing process and related machinery are relatively increased so that not only the selling price and manufacturing cost are kept in high level without possibility of lowering down but also the marketing promotion and popularity are retarded incurred by discourage to the purchasing intention of the consumers. Therefore, how to simplify the structural design and reduce manufacturing cost for the heat exchangers for bathing shower so as to satisfy the purchasing intention and ability of the consumers becomes a critical urgent issue.

### Summary of the Invention

The primary object of the present invention is to provide a manufacturing method and structure of heat exchanger for bathing shower so that the heat exchanger fabricated by the manufacturing method has simple structure to not only substantially decrease overall manufacturing cost with result in reducing selling price for being affordable by the purchasing ability of the consumers but also enhance overall energy saving effect and prolong service life span with result in encouraging the purchasing intention of the consumers. Thus, it is not only very beneficial to increase the promotional speed and popularity but also favorable to achieve the environmental protection in energy saving and carbon educing performance.

### Brief Description of the Drawings

**FIG. 1** is a flow chart showing a manufacturing process for the first embodiment of the present invention.
**FIG. 2** is a perspective schematic view showing an upper metal plate and a lower metal plate for the first embodiment of the present invention.
**FIG. 3** is a perspective schematic view showing the upper metal plate for the first embodiment of the present invention.
**FIG. 4** is a perspective schematic view showing the lower metal plate for the first embodiment of the present invention.
**FIG. 5** is the first operational view showing a spot welding on an upper metal plate and a lower metal plate for the first embodiment of the present invention.
**FIG. 6** is the second operational view showing a spot welding on an upper metal plate and a lower metal plate for the first embodiment of the present invention.
**FIG. 7** is a perspective schematic view showing a heat exchanger for bathing shower made by a primal method from the first embodiment of the present invention.
**FIG. 8** is a sectional view taken along line 8-8 as indicated in FIG. 7.
**FIG. 9** is a cross sectional view showing a heat exchanger for bathing shower made by a primal method from the first embodiment of the present invention.
**FIG. 10** is a perspective schematic view showing a heat exchanger for bathing shower made by a modified method from the first embodiment of the present invention.
**FIG. 11** is a sectional view taken along line **11-11** as indicated in **FIG. 10****.**
**FIG. 12** is a sectional view taken along line **12-12** as indicated in **FIG. 10****.**
**FIG. 13** is a perspective schematic view showing an installation of a heat exchanger for bathing shower made by a method from the first embodiment of the present invention.
**FIG. 14** is a cross sectional view showing an installation of a heat exchanger for bathing shower made by a method from the first embodiment of the present invention.
**FIG. 15** is a sectional view taken along line **15-15** as indicated in **FIG. 14****.**
**FIG. 16** is a perspective exploded schematic view showing a heat exchanger for bathing shower in the second embodiment of the present invention.
**FIG. 17** is a perspective schematic view showing an installation of a heat exchanger for bathing shower in the second embodiment of the present invention.
**FIG. 18** is a sectional view taken along line **18-18** as indicated in **FIG. 17****.**
**FIG. 19** is a sectional view taken along line **19-19** as indicated in **FIG. 17****.**
**FIG. 20** is a perspective exploded schematic view showing a heat exchanger for bathing shower in the third embodiment of the present invention.
**FIG. 21** is a perspective assembled schematic view showing a heat exchanger for bathing shower in the third embodiment of the present invention.
**FIG. 22** is a sectional view taken along line **22-22** as indicated in **FIG. 21****.**
**FIG. 23** is a perspective schematic view showing a metal tubular array of a heat exchanger for bathing shower in the third embodiment of the present invention.
**FIG. 24** is a top schematic view showing a metal tubular array of a heat exchanger for bathing shower in the third embodiment of the present invention.
**FIG. 25** is a cross sectional view showing a metal tubular array of a heat exchanger for bathing shower in the third embodiment of the present invention.
**FIG. 26** is the first top schematic view showing a modified metal tubular array of a heat exchanger for bathing shower in the third embodiment of the present invention.
**FIG. 27** is the second top schematic view showing another modified metal tubular array of a heat exchanger for bathing shower in the third embodiment of the present invention.
**FIG. 28** is the third top schematic view showing the other modified metal tubular array of a heat exchanger for bathing shower in the third embodiment of the present invention.

### Detailed Description of the Preferred Embodiments

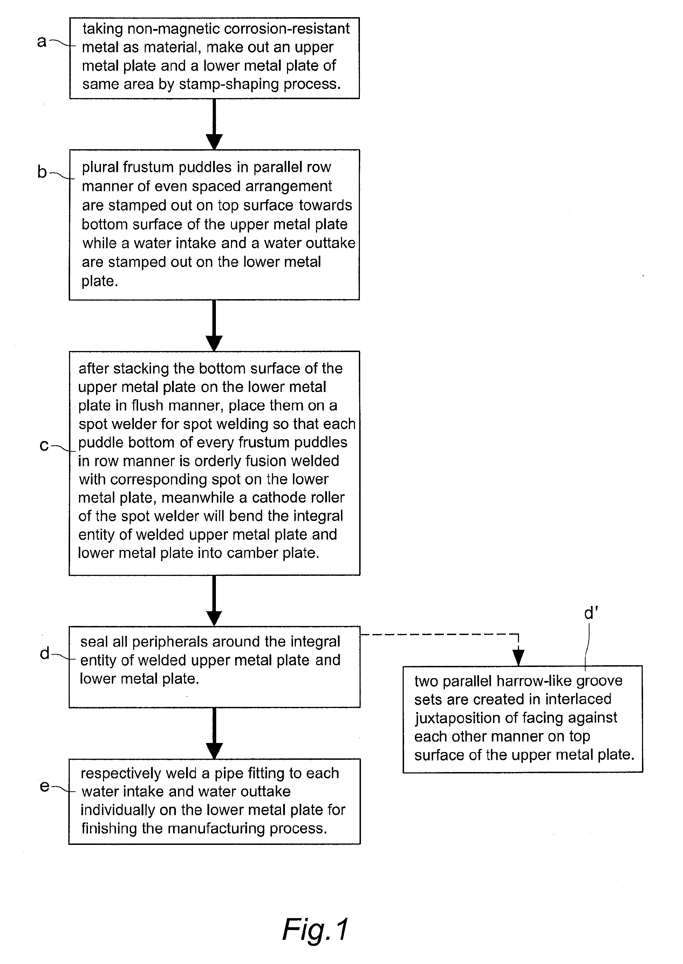

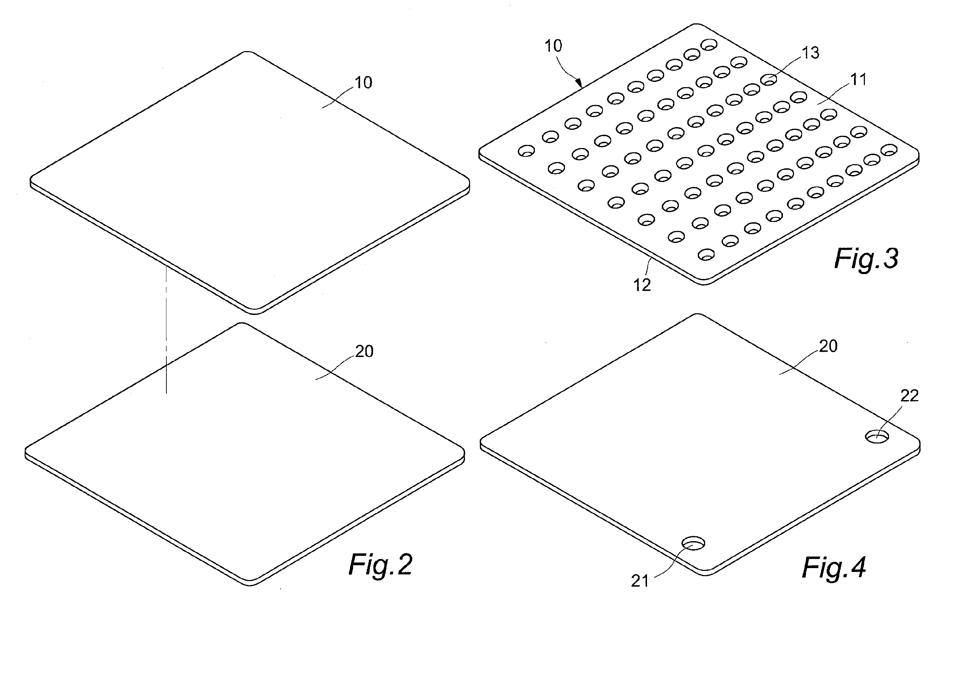

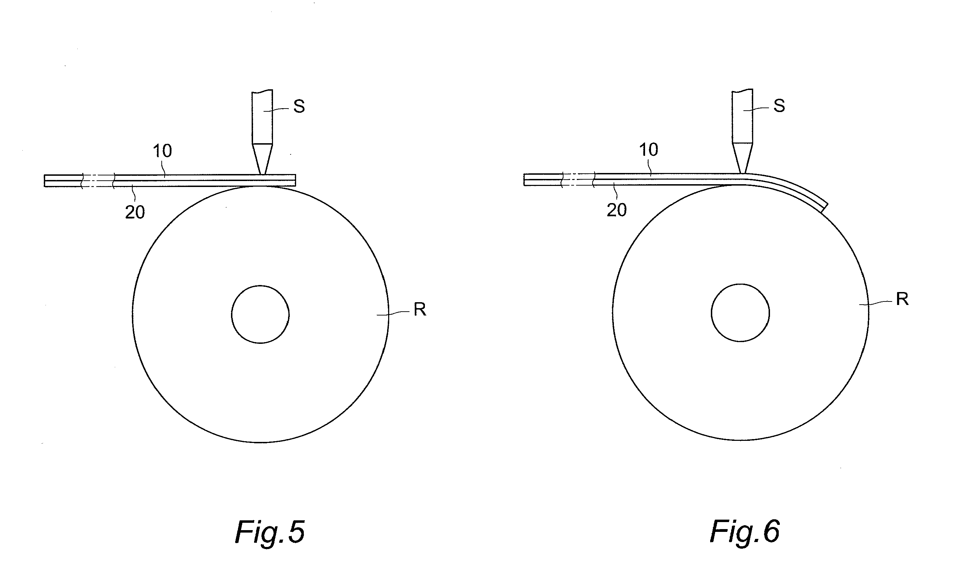

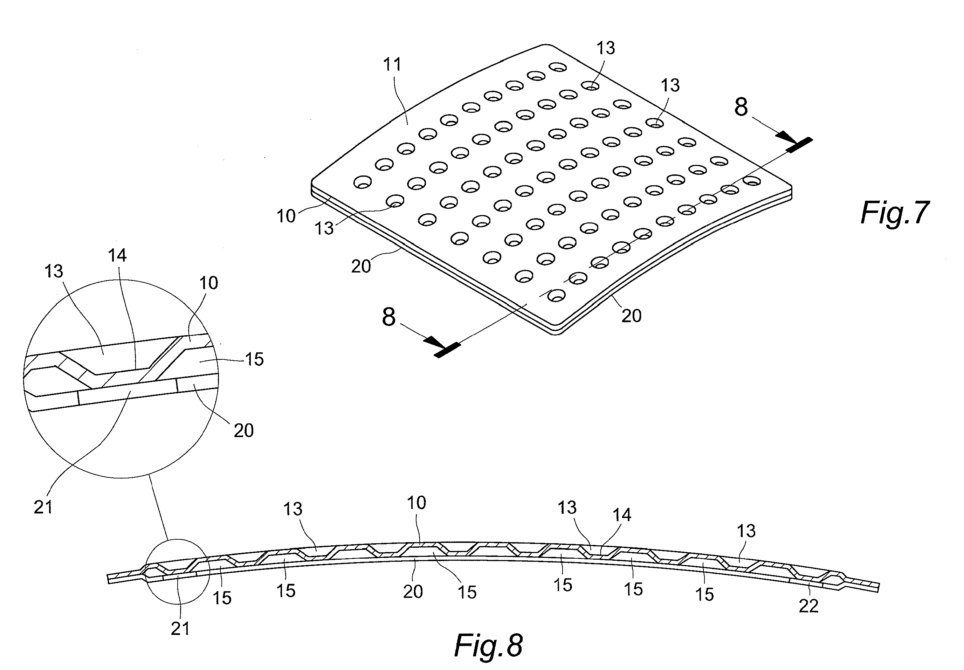

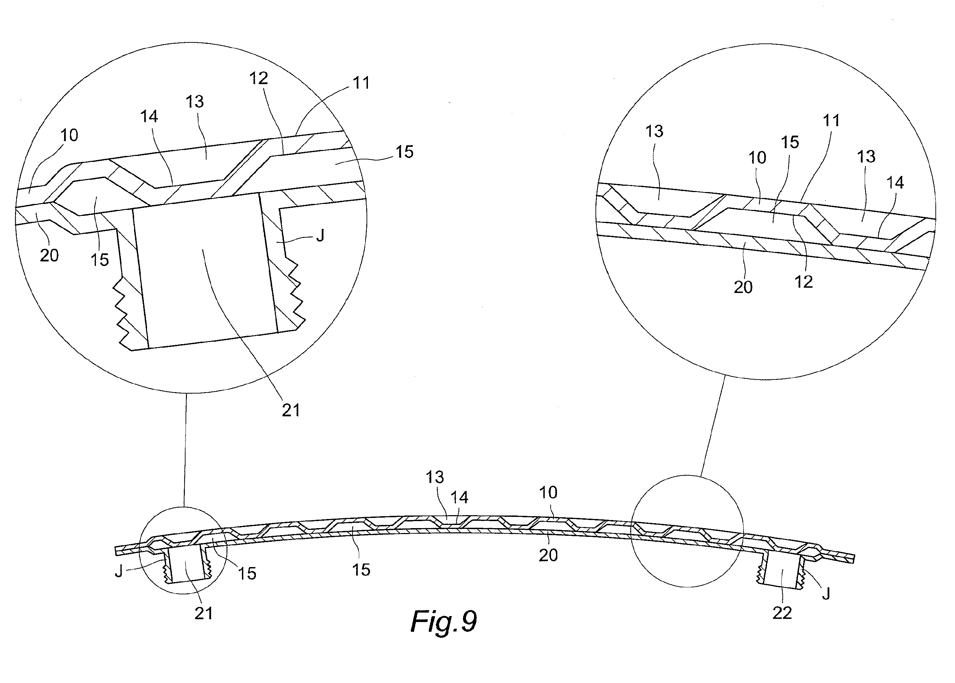

Please refer to **FIG. 1** and **FIG. 9**, which show comprised processing steps of the manufacturing method for a "heat exchanger for bathing shower" of the present invention as below:
**a.** taking non-magnetic corrosion-resistant metal as material, make out an upper metal plate **10** and a lower metal plate **20** of same area by stamp-shaping process (as shown in **FIG. 2**);
**b.** plural frustum puddles **13** in parallel row manner of even spaced arrangement are stamped out on top surface **11** towards bottom surface **12** of the upper metal plate **10** (as shown in **FIG. 3**) while a water intake **21** and a water outtake **22** are stamped out on the lower metal plate **20** (as shown in **FIG. 4**);
**c.** after stacking the bottom surface **12** of the upper metal plate **10** on the lower metal plate **20** in flush manner, place them on a spot welder **S** for spot welding (as shown in **FIG. 5**) so that each puddle bottom **14** of every frustum puddles **13** in row manner is orderly fusion welded with corresponding spot on the lower metal plate **20** (as shown in **FIG. 8**), meanwhile a cathode roller **R** of the spot welder **S** will bend the integral entity of welded upper metal plate **10** and lower metal plate **20** into camber plate (as shown in **FIG. 6**);
**d.** seal all peripherals around the integral entity of welded upper metal plate 10 and lower metal plate **20** (as shown in **FIG. 7**); and
**e.** respectively weld a pipe fitting **J** to each water intake **21** and water outtake **22** individually on the lower metal plate **20** for finishing the manufacturing process (as shown in **FIG. 9**).

Please refer to **FIG. 8** and **FIG. 9****.** The structure of a "heat exchanger for bathing shower" in the present invention manufactured by the previous process aforesaid comprises an upper metal plate **10** and a lower metal plate **20,** wherein:
Said upper metal plate **10,** which is a rectangle camber plate made of non-magnetic corrosion-resistant metal by stamp-shaping process, has plural frustum puddles **13** in parallel row manner of even spaced arrangement stamped out on top surface **11** towards bottom surface **12** thereof such that the diameter of each puddle bottom **14** is smaller than that for opening of the frustum puddle **13** (as shown in **FIG. 8** and related enlarged view); and
Said lower metal plate **20,** which is a rectangle camber plate made of non-magnetic corrosion-resistant metal by stamp-shaping process with same area as the upper metal plate 10 for being padded beneath bottom surface **12** of the upper metal plate **10** in stack manner by spot welding fusion, has a water intake **21** and a water outtake **22** stamped out thereon such that a pipe fitting **J** is respectively welded to each water intake **21** and water outtake **22** individually (as shown in **FIG. 9**); Thereby, each puddle bottom **14** of every frustum puddles **13** in row manner is fusion welded with corresponding spot on the lower metal plate **20,** and all peripherals around the upper metal plate **10** and lower metal plate **20** are welding sealed into an integral entity (as shown in **FIG. 7**) so that all rest interior space other than these plural frustum puddles **13** enclosed by the upper metal plate **10** and lower metal plate **20** creates a hollow space **15** for water circulation (as shown in **FIG. 9** and related enlarged view).

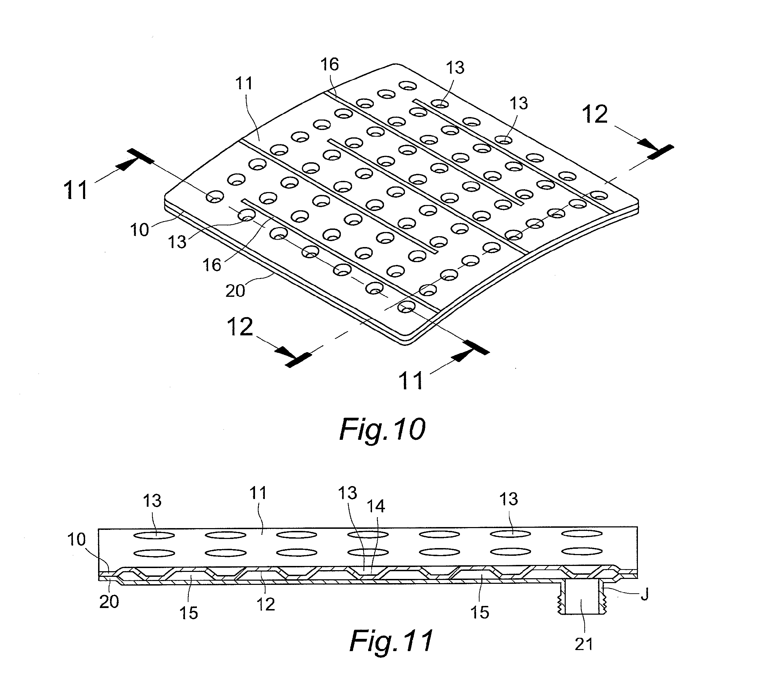

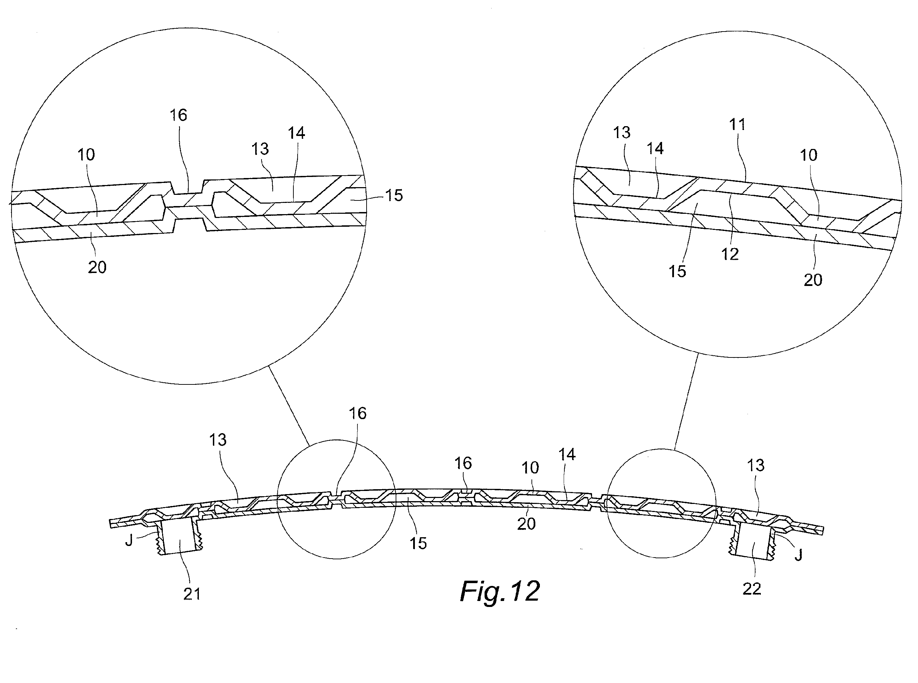

Please refer to **FIG. 1****,** **FIG. 10** and **FIG. 12****.** The process step **d** can further include an additional step **d',** which has two parallel harrow-like groove sets **16** created in interlaced juxtaposition of facing against each other manner on top surface **11** of the upper metal plate 10 such that every adjacent prong grooves in each groove sets **16** are spaced by even number including four rows of frustum puddles **13** (as shown in **FIGS. 10** and **12**); thereby all prong grooves in each groove sets **16** are interlaced in facing manner to enhance the water circulating direction in the hollow space **15** with result in promoting the efficiency of the heat exchange.

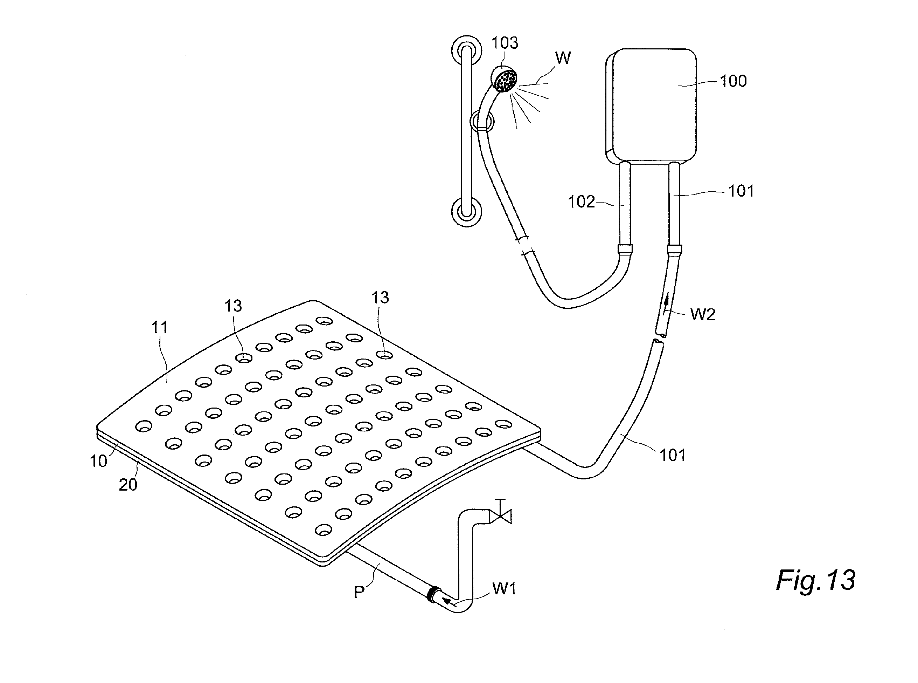

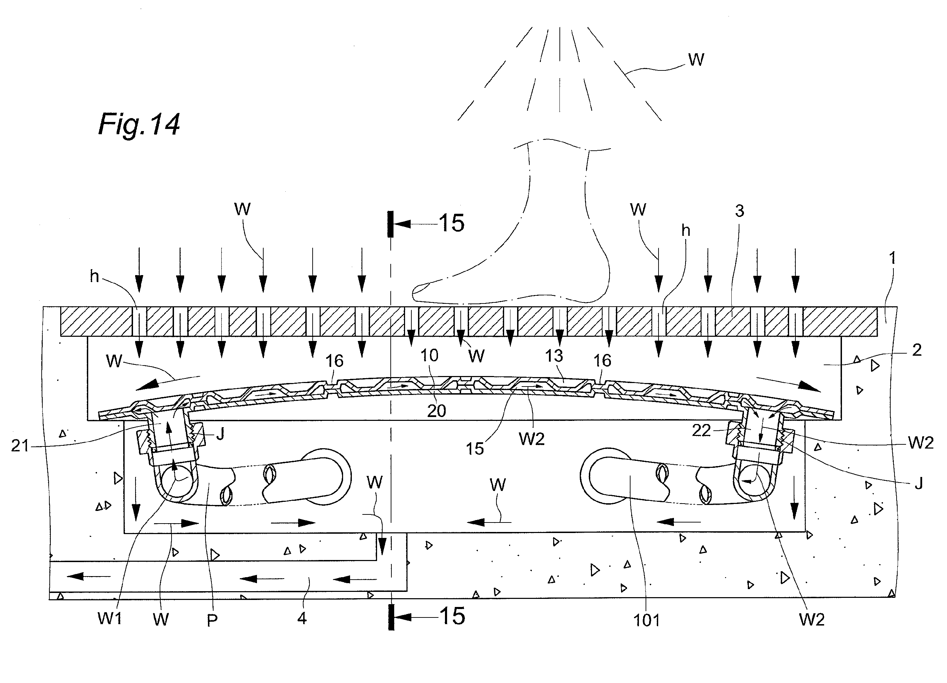

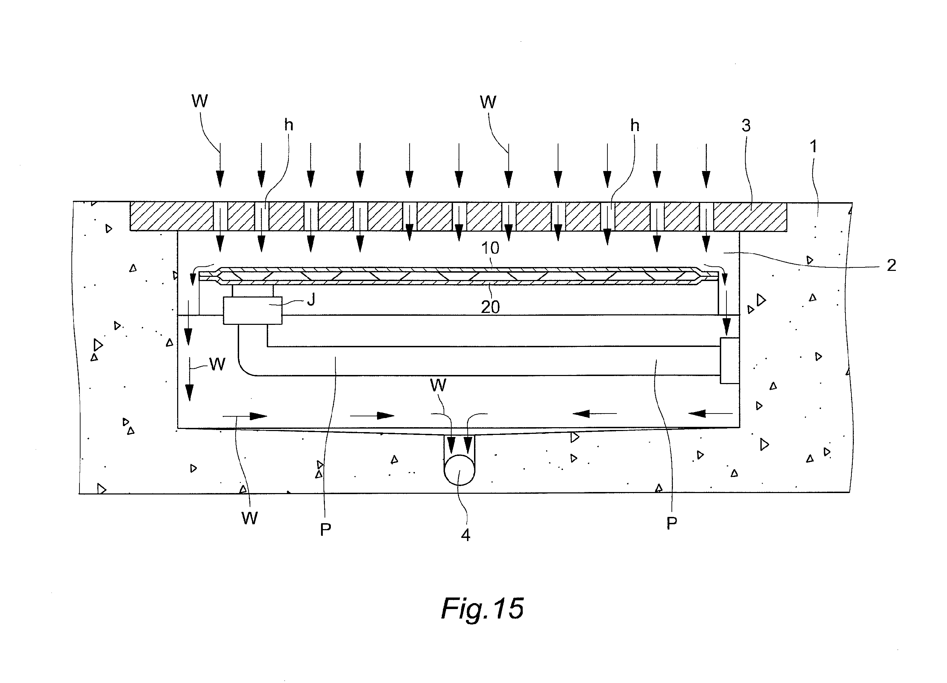

Please refer to **FIG. 13** through **FIG. 15**, which show an installation and shower operation of a heat exchanger for bathing shower of the present invention. For installation, firstly, put the heat exchanger for bathing shower of the present invention in a tiered basin **2** of floor of bathroom **1;** secondly, connect a tap water pipe **P** to the pipe fitting **J** of the water intake **21** in the lower metal plate **20;** thirdly, connect an inlet pipe **101** of a water heater **100** to the pipe fitting **J** of the water outtake **22** in the lower metal plate **20;** and finally, cover a treading plate **3** with plural bores **h** over the top opening of the tiered basin **2** to finish the installation (as shown in **FIGS. 13** and **FIG. 14**). For shower operation, firstly, certain hot shower water W, which comes from the water heater **100** via outlet pipe **102** and sprinkles out of a shower sprayer **103,** is used for showering on the user body; secondly, the hot shower water **W** will drip to the top surface **11** of the upper metal plate **10** via plural bores **h** in the treading plate **3** on the floor of bathroom **1;** thirdly, certain cold tap water **W1,** which comes from the tap water pipe **P** via the pipe fitting **J** of the water intake **21** on the lower metal plate **20** and flows into the hollow space **15** enclosed by the bottom surface **12** of the upper metal plate **10** and the lower metal plate **20,** will perform heat exchange by absorbing thermal energy of the hot shower water W, which already dripped to the top surface **11** of the upper metal plate **10;** fourthly, the cold tap water **W1** will become warm heat-exchanged water **W2** after previous heat exchange; fifthly, the warm heat-exchanged water **W2** will flow into the inlet pipe **101** of the water heater **100** via the pipe fitting **J** of the water outtake **22** on the lower metal plate **20** to save heating energy consumption of the water heater **100** (as shown in **FIGS. 13** and **FIG. 14**); and finally, the wasted hot shower water W, which has been heat exchanged, will be discharged out via a draining weeper **4** at the bottom of the tiered basin **2** (as shown in **FIGS. 14** and **FIG. 15**).

It is known from foregoing disclosure for the manufacture of the present invention that stainless steel plate #SUS303 or #SUS304 can be selected as material of both upper metal plate **10** and lower metal plate **20** for further stamping and spot welding process into an integral entity by existing ordinary working process and machinery or equipments so that not only the selling price and manufacturing cost can lower down with result in increasing the purchasing ability of the consumers but also the marketing promotion and popularity can be promoted by courage to the purchasing intention of the consumers. Therefore, in advocating energy saving promotion in water heater **100** by recycling usage the hot shower water **W** will have immediate significant effect. Moreover, temporary holding hot shower water **W** function in every frustum puddles **13** on the upper metal plate **10** will increase heat exchanging time with the cold tap water **W1** so that not only the heat exchanging efficiency will be increased but also the energy saving effect of the water heater **100** will be promoted.

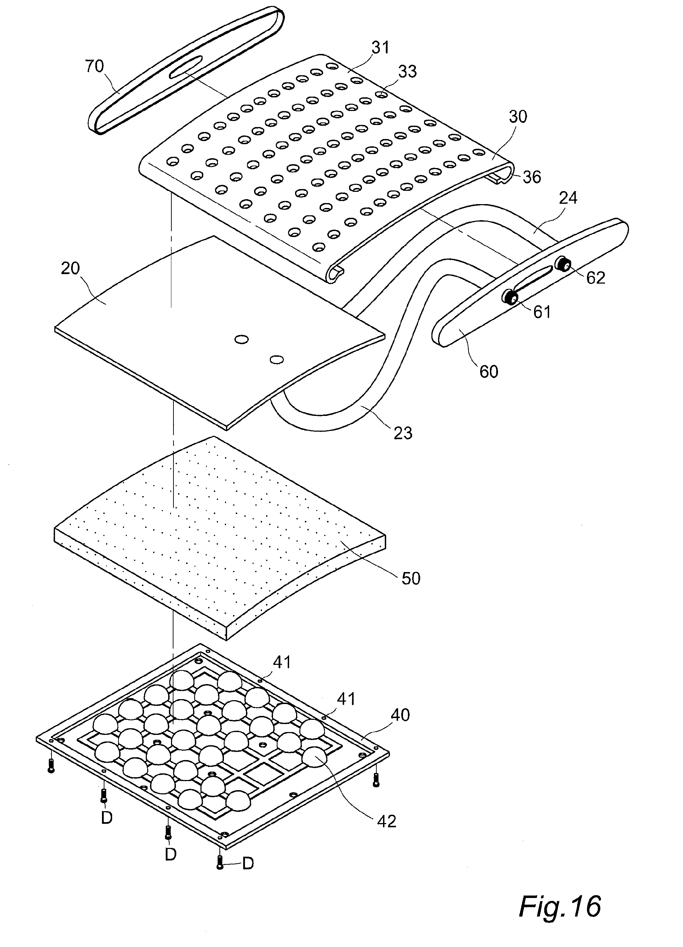

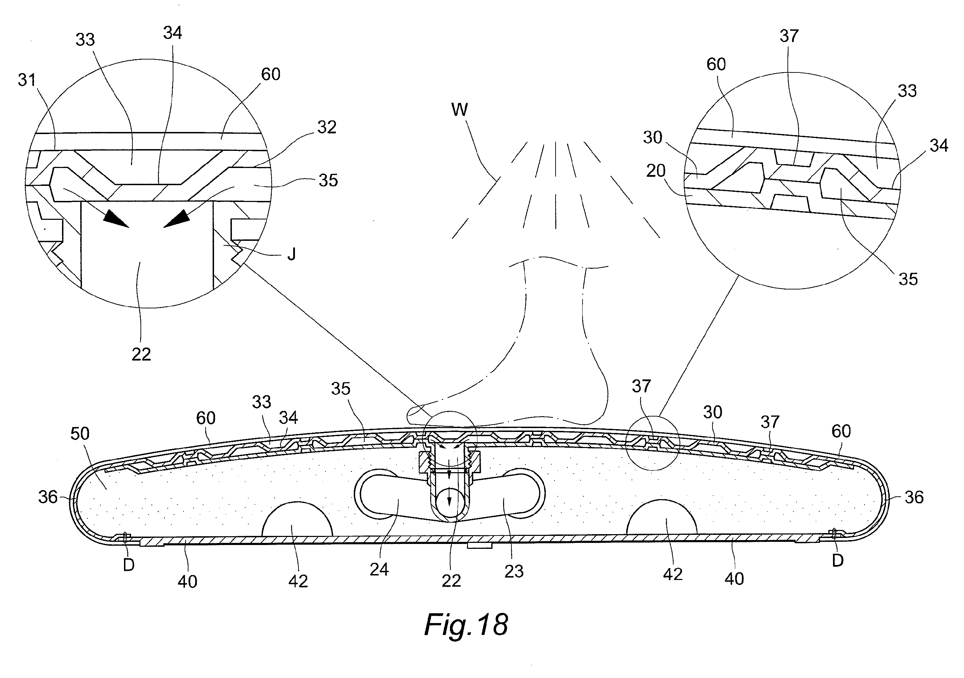

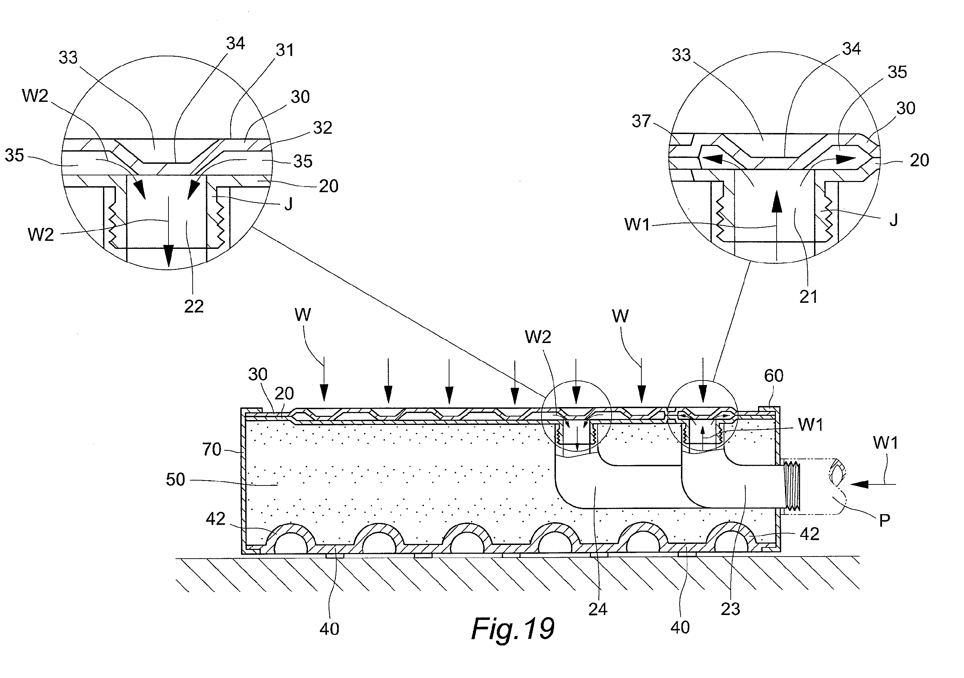

Please refer to **FIGS. 16** through **19****,** which show a heat exchanger for bathing shower in the second embodiment of the present invention. The heat exchanger for bathing shower in this embodiment comprises an upper metal plate **30,** a lower metal plate **20,** a sandwiched adiabatic layer **50,** a sole deck **40,** a right flank **60** and a left flank **70,** wherein:
Said upper metal plate **30,** which is a rectangle camber plate with a pair of longitudinal tucked edges **36** made of non-magnetic corrosion-resistant metal by stamp-shaping process, has plural frustum puddles **33** in parallel row manner of even spaced arrangement stamped out on top surface **31** towards bottom surface **32** thereof such that the diameter of each puddle bottom **34** is smaller than that for opening of the frustum puddle **33;**
Said lower metal plate **20,** which is a rectangle camber plate made of non-magnetic corrosion-resistant metal by stamp-shaping process with area smaller than that of the upper metal plate **30** for being padded beneath bottom surface **32** of the upper metal plate **30** in stack manner by spot welding fusion, has a water intake **21** and a water outtake **22** stamped out thereon such that an inlet duct **23** is welded to the water intake **21** and an outlet duct **24** is welded to the water outtake **22** respectively (as shown in **FIG. 16**); Thereby, each puddle bottom **34** of every frustum puddles **33** in row manner is fusion welded with corresponding spot on the lower metal plate **20,** and all peripherals around the upper metal plate **30** and lower metal plate **20** are welding sealed into an integral entity (as shown in **FIG. 18**) so that all rest interior space other than these plural frustum puddles **33** enclosed by the upper metal plate **30** and lower metal plate **20** creates a hollow space **35** for water circulation (as shown in **FIGS. 18****,** **FIG. 19** and related enlarged view);
Said sole deck **40,** which is a rectangle planar plate with same area as the upper metal plate **30** with plural nipples **42** disposed on the top surface thereof for being served as mount foundation, has plural fixing holes **41** created in a pair of longitudinal margins thereof to be run by automatic threading screws **D** through corresponding pair tucked edges 36 on the upper metal plate **30** for screwing mount each other;
Said sandwiched adiabatic layer **50,** which is made of materials with adiabatic property such as foaming isocyanate, volatile polystyrene, wools of mineral dregs, aluminum silicate or the like, is sandwiched between the lower metal plate **20** and sole deck **40;**
Said right flank **60,** which covers right transverse side of the assembled upper metal plate **30** and sole deck **40,** has an inlet pipe fitting **61** and an outlet pipe fitting **62** configured thereat such that the internal end of the inlet pipe fitting **61** is connected to the inlet duct **23** and the internal end of the outlet pipe fitting **62** is connected to the outlet duct **24**; and
Said left flank **70,** which covers other left transverse side of the assembled upper metal plate **30** and sole deck **40,** has same area and shape as those of the right flank 60.

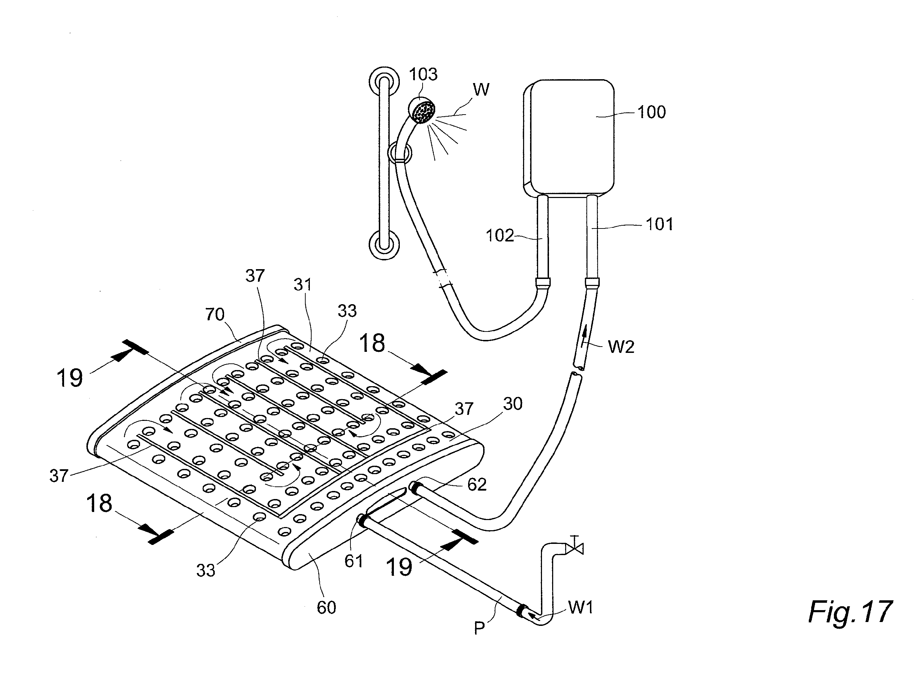

Wherein, two parallel harrow-like groove sets **37** are created in interlaced juxtaposition of facing against each other manner on top surface **31** of the upper metal plate 30 such that every adjacent prong grooves in each groove sets **37** are spaced by even number including four rows of frustum puddles **33** (as shown in **FIG. 17**); thereby all prong grooves in each groove sets **37** are interlaced in facing manner to enhance the water circulating direction in the hollow space **35** with result in promoting the efficiency of the heat exchange.

Please refer to **FIG. 17** through **FIG. 19****,** which show an installation and shower operation of a heat exchanger for bathing shower in this embodiment of the present invention. For installation, connect a tap water pipe **P** to the inlet pipe fitting **61** of the right flank **60,** and connect an inlet pipe **101** of a water heater **100** to the outlet pipe fitting **62** of the right flank **60** to finish the installation. For shower operation, firstly, certain hot shower water W, which comes from the water heater **100** via outlet pipe **102** and sprinkles out of a shower sprayer **103,** is used for showering on the user body; secondly, the hot shower water **W** will drip to the top surface **31** of the upper metal plate **30;** thirdly, certain cold tap water **W1,** which comes from the tap water pipe **P** via the inlet pipe fitting **61** of the right flank **60** and flows into the hollow space **35** enclosed by the bottom surface **32** of the upper metal plate **30** and the lower metal plate **20** via the inlet duct **23** and water intake **21** of the lower metal plate **20,** will perform heat exchange by absorbing thermal energy of the hot shower water W, which already dripped to the top surface **31** of the upper metal plate **30** (as shown in **FIG. 19**); fourthly, the cold tap water **W1** will become warm heat-exchanged water **W2** after previous heat exchange; fifthly, the warm heat-exchanged water **W2** will flow into the inlet pipe **101** of the water heater **100** via the outlet pipe fitting **62** of the right flank **60** to save heating energy consumption of the water heater **100** (as shown in **FIG. 17**); and finally, the wasted hot shower water W, which has been heat exchanged, will be discharged out of an outlet duct **24** via a water outtake **22** in the lower metal plate **20** (as shown in **FIG. 18**).

Wherein, owing to the adiabatic feature of the sandwiched adiabatic layer **50,** the temperature of the warm heat-exchanged water **W2** can be well maintained by the sandwiched adiabatic layer **50** so that minimal thermal energy of the warm heat-exchanged water **W2** to the inlet pipe **101** of the water heater **100** will be lost. Moreover, the heat exchanging effect will be increased due to enhancement of the water circulating direction in the hollow space **35** by two parallel harrow-like groove sets **37** created against each other in juxtaposition manner on top surface **31** of the upper metal plate **30.** Thus, overall energy saving effect for the water heater **100** is considerable promoted by the heat exchanger for bathing shower of the present invention. Furthermore, because high supporting effect from the puddle bottom **34** of each frustum puddle **33** in the upper metal plate **30** being closely attached to the lower metal plate **20** is strong enough to bear the body weight of the shower user with any deformation so that application safety is well provided.

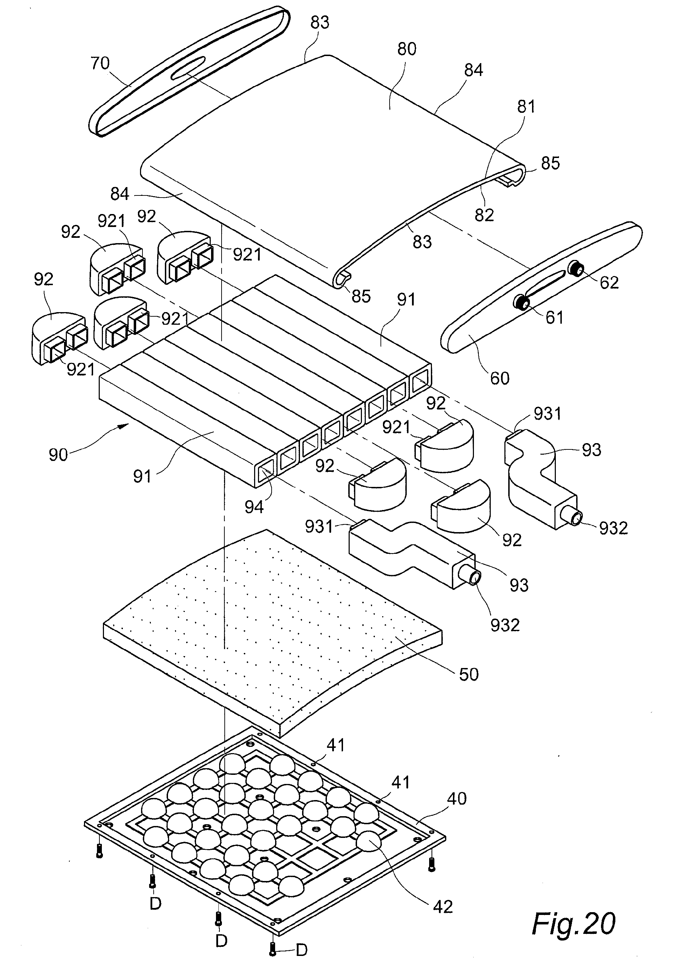

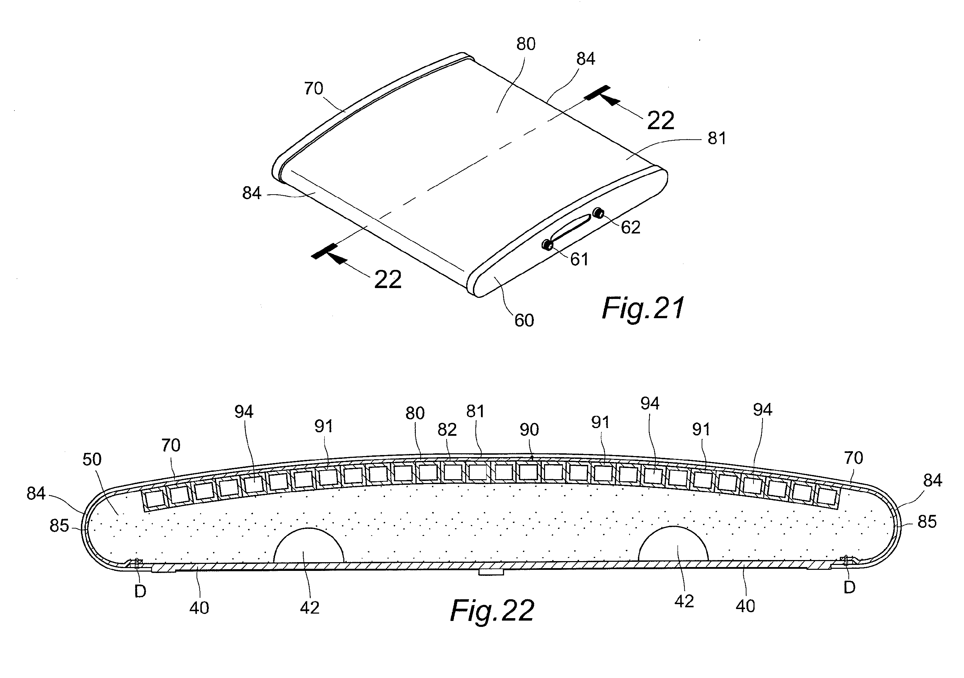

Please refer to **FIGS. 20** through **24****,** which show a heat exchanger for bathing shower in the third embodiment of the present invention. The heat exchanger for bathing shower in this embodiment comprises a top metal plate **80,** a metal tubular array **90,** a sandwiched adiabatic layer **50,** a sole deck **40,** a right flank **60** and a left flank **70,** wherein:
Said top metal plate **80,** which is a rectangle camber plate made of non-magnetic corrosion-resistant metal by stamp-shaping process, has a top surface **81,** a bottom surface **82,** two transverse sides **83** and two longitudinal sides **84** with a pair of longitudinal tucked edges **85;**
Said metal tubular array **90,** which is located beneath and attached to the bottom surface **82** of the top metal plate **80,** comprises plural (8) straight metal tubes **91,** plural (left 4 and right 3) U-bend fittings **92,** and two offset fittings **93,** wherein:

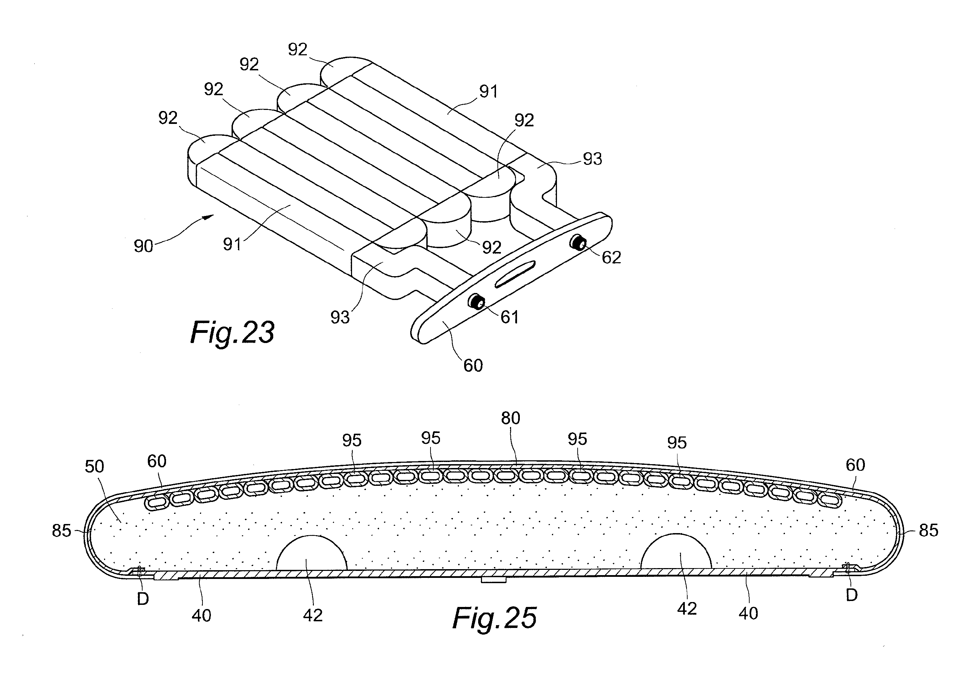

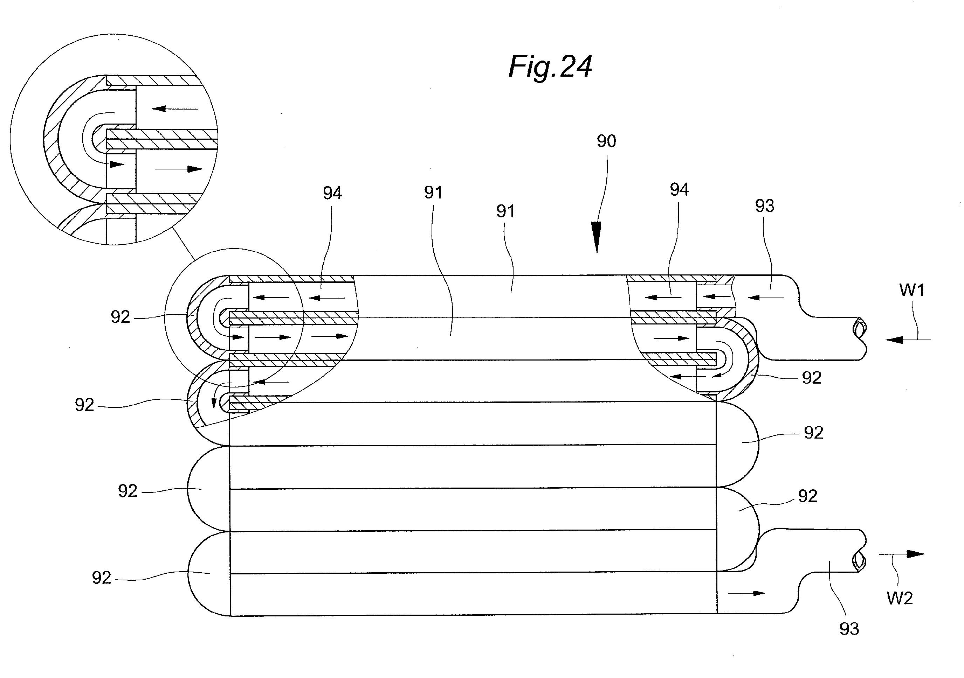

The straight metal tubes **91,** whose section shape of each tube is square, are orderly abutted from forefront to backmost, for explanation easiness they can be numbered for example as 91-1, ---, and 91-8 (not shown in figures);
Each U-bend fitting **92,** which is a bent hollow tube with a pair of parallel square fitting noses **921** configured at each open end respectively such that outer size of each square fitting nose **921** is slightly smaller than inner size of each straight metal tubes **91,** for explanation easiness all the U-bend fittings **92** can be numbered for example as 92-a, ---, and 92-g from left-front corner to right-back corner via left-back corner and right-front corner orderly (not shown in figures);
Each offset fittings **93** has a square fitting nose **931** disposed at internal open end for connection to a open square end of the straight metal tubes **91** while a pipe fitting nose **932** disposed at external open end for connection to the inlet pipe fitting **61** or outlet pipe fitting **62** in the right flank **60;**
By suitable interlaced coupling arrangement of the plural straight metal tubes **91** and plural U-bend fittings **92** for example U-bend fitting 92-a couples each left end of straight metal tube 91-1 and straight metal tube 91-2 while U-bend fitting 92-e couples each right end of straight metal tube 91-2 and straight metal tube 91-3 and so on, a continuous water circulating passage **94** can be created in the metal tubular array **90** (as shown in **FIG. 24**);
Said sole deck **40,** which is a rectangle planar plate with same area as the top metal plate **80** with plural nipples **42** disposed on the top surface thereof for being served as mount foundation, has plural fixing holes **41** created in a pair of longitudinal margins thereof to be run by automatic threading screws **D** through corresponding pair tucked edges **85** on the top metal plate **80** for screwing mount each other;
Said sandwiched adiabatic layer **50,** which is made of materials with adiabatic property such as foaming isocyanate, volatile polystyrene, wools of mineral dregs or aluminum silicate and the like, is sandwiched between the metal tubular array **90** and sole deck **40;**
Said right flank **60,** which covers right transverse side of the assembled top metal plate **80** and sole deck **40,** has a inlet pipe fitting **61** and a outlet pipe fitting **62** configured thereat such that the internal end of the inlet pipe fitting **61** is connected to a pipe fitting nose **932** of a offset fitting **93** and the internal end of the outlet pipe fitting **62** is connected to a pipe fitting nose **932** of the other offset fitting **93** (as shown in **FIG. 23**); and
Said left flank **70,** which covers other left transverse side of the assembled top metal plate **80** and sole deck **40,** has same area and shape as those of the right flank **60.**

Wherein, all the square section shapes for the end section of each straight metal tube **91,** the square fitting nose **921** of each U-bend fitting **92** and the square fitting nose **931** of each offset fitting **93** in the metal tubular array **90** can be altered into elliptic section shapes in adaptable manner like elliptic straight metal tube **95** (as shown in **FIG. 25**), elliptic fitting nose **961** and elliptic fitting nose **971** (not shown in **FIG. 25**).

In practical application, firstly, certain cold tap water **W1** flows into the water circulating passage **94** in the metal tubular array **90** via the inlet pipe fitting **61** of the right flank **60** and connected offset fitting **93** orderly; secondly, certain hot shower water **W,** after showering on the user body, will drip to the top surface **81** of the top metal plate **80;** thirdly, the cold tap water **W1** will be heated up to become warm heat-exchanged water **W2** after heat exchanging in the metal tubular array **90;** and finally, the warm heat-exchanged water **W2** is fed to the inlet pipe **101** of the water heater **100** via the other offset fitting **93** and connected outlet pipe fitting **62** orderly (as shown in **FIGS. 23** and **24**) to achieve the effect in heating energy consumption saving for the water heater **100.** Moreover, because of the big section area of the straight metal tube **91** in the metal tubular array **90,** the heat exchanger for bathing shower in this embodiment of the present invention can be applied in a large scale bathing shower site to supply enough quantity of hot shower water **W.** Besides, other than the relative cheap procurement cost of the straight metal tubes **91,** mass production of the U-bend fitting **92** and offset fitting **93** is feasible by means of molding process. Therefore, overall manufacturing cost can be substantially reduced without any negative effect to the marketing promotion in selling the heat exchanger for bathing shower of the present invention.

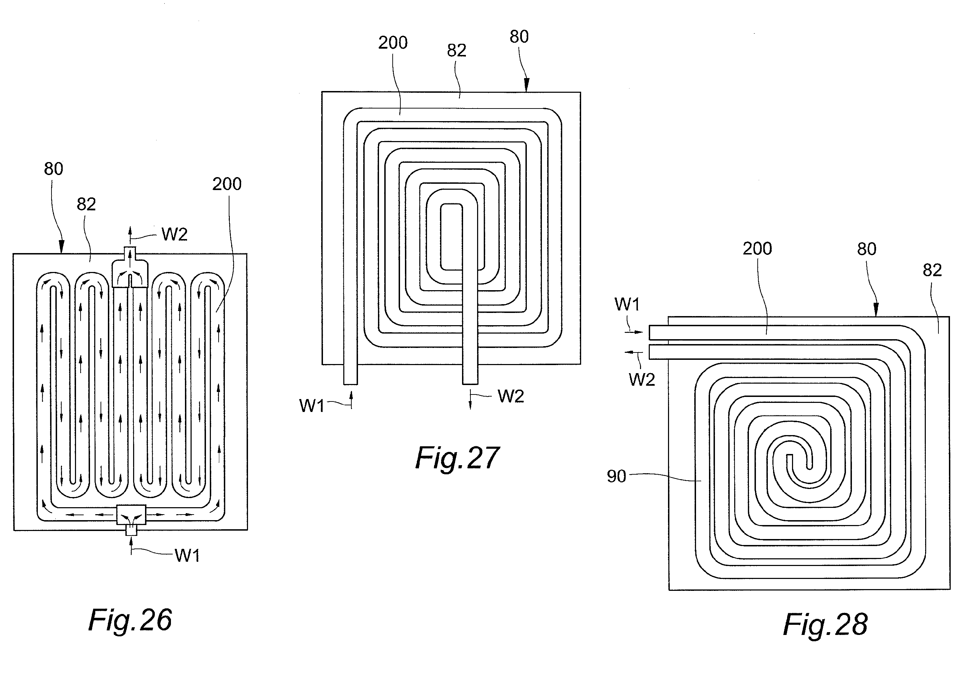

Please further refer to **FIGS. 26** through **28****.** The previous metal tubular array **90** aforesaid can be modified into many variant metal tubular arrays **200** such as either adapted serpent type from both longitudinal margins being symmetrically pleated into the central line beneath the bottom surface **82** of the top metal plate **80** and vice versa (as shown in **FIG. 26**) or adapted coil type from center being wound outwardly beneath the bottom surface **82** of the top metal plate **80** and vice versa (as shown in **FIGS. 27** and **28**), all of which do have significant effect in saving energy consumption for the water heater **100.**

## Claims

1. A manufacturing method in fabricating heat exchanger for bathing shower comprises processing steps as below:
**(a)** taking non-magnetic corrosion-resistant metal as material make out an upper metal plate and a lower metal plate of same area by stamp-shaping process;
**(b)** plural frustum puddles in parallel row manner of even spaced arrangement are stamped out on top surface towards bottom surface of the upper metal plate while a water intake and a water outtake are stamped out on the lower metal plate;
**(c)** after stacking the bottom surface of the upper metal plate on the lower metal plate in flush manner, place them on a spot welder for spot welding so that each puddle bottom of every frustum puddles in row manner is orderly fusion welded with corresponding spot on the lower metal plate, meanwhile a cathode roller of the spot welder will bend the integral entity of welded upper metal plate and lower metal plate into camber plate;
**(d)** seal all peripherals around the integral entity of welded upper metal plate and lower metal plate; and
**(e)** respectively weld a pipe fitting to each water intake and water outtake individually on the lower metal plate for finishing the manufacturing process.

2. A manufacturing method is as claimed in claim 1, wherein said step **(d)** further includes an additional step **(d')** of , which has two parallel harrow-like groove sets created in interlaced juxtaposition of facing against each other manner on top surface of the upper metal plate.

3. A structure of a heat exchanger for bathing shower, comprising:
an upper metal plate; and
a lower metal plate,
wherein said upper metal plate is a rectangle camber plate made of non-magnetic corrosion-resistant metal by stamp-shaping process, has plural frustum puddles in parallel row manner of even spaced arrangement stamped out on top surface towards bottom surface thereof such that the diameter of each puddle bottom is smaller than that for opening of the frustum puddle, and
wherein said lower metal plate is a rectangle camber plate made of non-magnetic corrosion-resistant metal by stamp-shaping process with same area as the upper metal plate for being padded beneath bottom surface of the upper metal plate in stack manner by spot welding fusion, has a water intake and a water outtake stamped out thereon such that a pipe fitting is respectively welded to each water intake and water outtake individually; Thereby, each puddle bottom of every frustum puddles in row manner is fusion welded with corresponding spot on the lower metal plate, and all peripherals around the upper metal plate and lower metal plate are welding sealed into an integral entity so that all rest interior space other than these plural frustum puddles enclosed by the upper metal plate and lower metal plate creates a hollow space for water circulation.

4. A structure of a heat exchanger for bathing shower as claimed in claim 3,
wherein said upper metal plate and lower metal plate are made of non-magnetic stainless steel plate by stamp-shaping process.

5. A structure of a heat exchanger for bathing shower, comprising:
an upper metal plate;
a lower metal plate;
a sandwiched adiabatic layer;
a sole deck;
a right flank and
a left flank,
wherein said upper metal plate is a rectangle camber plate with a pair of longitudinal tucked edges made of non-magnetic corrosion-resistant metal by stamp-shaping process, has plural frustum puddles in parallel row manner of even spaced arrangement stamped out on top surface towards bottom surface thereof such that the diameter of each puddle bottom is smaller than that for opening of the frustum puddle,
wherein said lower metal plate is a rectangle camber plate made of non-magnetic corrosion-resistant metal by stamp-shaping process with area smaller than that of the upper metal plate for being padded beneath bottom surface of the upper metal plate in stack manner by spot welding fusion, has a water intake and a water outtake stamped out thereon such that an inlet duct is welded to the water intake and an outlet duct is welded to the water outtake respectively; Thereby, each puddle bottom of every frustum puddles in row manner is fusion welded with corresponding spot on the lower metal plate, and all peripherals around the upper metal plate and lower metal plate are welding sealed into an integral entity so that all rest interior space other than these plural frustum puddles enclosed by the upper metal plate and lower metal plate creates a hollow space for water circulation,
wherein said sole deck is a rectangle planar plate with same area as the upper metal plate with plural nipples disposed on the top surface thereof for being served as mount foundation, has plural fixing holes created in a pair of longitudinal margins thereof to be run by automatic threading screws through corresponding pair tucked edges on the upper metal plate for screwing mount each other,
wherein said sandwiched adiabatic layer is made of materials with adiabatic property, is sandwiched between the lower metal plate and sole deck,
wherein said right flank is covers right transverse side of the assembled upper metal plate and sole deck, has an inlet pipe fitting and an outlet pipe fitting configured thereat such that the internal end of the inlet pipe fitting is connected to the inlet duct and the internal end of the outlet pipe fitting is connected to the outlet duct, and
wherein said left flank is covers other left transverse side of the assembled upper metal plate and sole deck, has same area and shape as those of the right flank.

6. A structure of a heat exchanger for bathing shower as claimed in claim 5,
wherein said two parallel harrow-like groove sets are created in interlaced juxtaposition of facing against each other manner on top surface of the upper metal plate.

7. A structure of a heat exchanger for bathing shower as claimed in claim 5,
wherein said sandwiched adiabatic layer is made of foaming isocyanate, volatile polystyrene, wools of mineral dregs, aluminum silicate or the like.

8. A structure of a heat exchanger for bathing shower, comprising:
a top metal plate;
a metal tubular array;
a sandwiched adiabatic layer;
a sole deck;
a right flank; and
a left flank,
wherein said top metal plate is a rectangle camber plate made of non-magnetic corrosion-resistant metal by stamp-shaping process, has a top surface, a bottom surface, two transverse sides and two longitudinal sides with a pair of longitudinal tucked edges,
wherein said metal tubular array is located beneath and attached to the bottom surface of the top metal plate, comprises plural straight metal tubes, plural U-bend fittings, and two offset fittings, wherein the straight metal tubes, whose section shape of each tube is square, are orderly abutted from forefront to backmost; each U-bend fitting, which is a bent hollow tube with a pair of parallel square fitting noses configured at each open end respectively such that outer size of each square fitting nose is slightly smaller than inner size of each straight metal tubes; each offset fittings has a square fitting nose disposed at internal open end for connection to a open square end of the straight metal tubes while a pipe fitting nose disposed at external open end for connection to the inlet pipe fitting or outlet pipe fitting in the right flank,
wherein said sole deck is a rectangle planar plate with same area as the top metal plate with plural nipples disposed on the top surface thereof for being served as mount foundation, has plural fixing holes created in a pair of longitudinal margins thereof to be run by automatic threading screws through corresponding pair tucked edges on the top metal plate for screwing mount each other,
wherein said sandwiched adiabatic layer is made of materials with adiabatic property, is sandwiched between the metal tubular array and sole deck,
wherein said right flank is covers right transverse side of the assembled top metal plate and sole deck, has a inlet pipe fitting and a outlet pipe fitting configured thereat such that the internal end of the inlet pipe fitting is connected to a pipe fitting nose of a offset fitting and the internal end of the outlet pipe fitting is connected to a pipe fitting nose of the other offset fitting, and
wherein said left flank is covers other left transverse side of the assembled top metal plate and sole deck, has same area and shape as those of the right flank.

9. A structure of a heat exchanger for bathing shower as claimed in claim 8,
wherein said all the square section shapes for the end section of each straight metal tube, the square fitting noses of each U-bend fitting and each offset fitting in the metal tubular array can be altered into elliptic section shapes in adaptable manner like elliptic straight metal tube, elliptic fitting noses.

10. A structure of a heat exchanger for bathing shower as claimed in claim 8,
wherein said sandwiched adiabatic layer is made of foaming isocyanate, volatile polystyrene, wools of mineral dregs, aluminum silicate or the like.

11. A structure of a heat exchanger for bathing shower as claimed in claim 8,
wherein said metal tubular array is modified into adapted serpent type from both longitudinal margins being symmetrically pleated into the central line beneath the bottom surface of the top metal plate or vice versa.

12. A structure of a heat exchanger for bathing shower as claimed in claim 8,
wherein said metal tubular array is modified into adapted coil type from center being wound outwardly beneath the bottom surface of the top metal plate or vice versa
